Europäisches Patentamt

European Patent Office

Office européen des brevets

(19)

(11) Numéro de publication: **0 161 146**
**B1**

(12) **FASCICULE DE BREVET EUROPEEN**

(45) Date de publication du fascicule du brevet:
01.06.88

(51) Int. Cl.⁴: **B 60 G 21/04,** B 60 G 11/44

(21) Numéro de dépôt: 85400629.3

(22) Date de dépôt: 29.03.85

(54) **Système de suspension pour un train de roues de véhicule à essieu rigide.**

(30) Priorité: 03.04.84 FR 8405246

(43) Date de publication de la demande:
13.11.85 Bulletin 85/46

(45) Mention de la délivrance du brevet:
01.06.88 Bulletin 88/22

(84) Etats contractants désignés:
BE DE GB IT NL SE

(56) Documents cités:
EP - A - 0 085 584
FR - A - 448 971
FR - A - 686 758
FR - A - 697 897
FR - A - 759 852
FR - A - 1 122 994
FR - A - 1 136 383
FR - A - 1 146 961
FR - A - 2 529 239
GB - A - 694 386
US - A - 1 327 746
US - A - 3 388 924
US - A - 4 125 276

(73) Titulaire: AEROSPATIALE Société Nationale
Industrielle, 37, Boulevard de Montmorency,
F-75781 Paris Cédex 16 (FR)

(72) Inventeur: Aubry, Jacques, 2, avenue Marie Gasquet,
F-13480 Cabries (FR)
Inventeur: Bonfils, Michel, Chemin de la Mer, F-13760 St.
Cannat (FR)
Inventeur: Merlet, Jean-Paul, Villa Treize Etoiles,
Legassin F-13120 Mimet (FR)

(74) Mandataire: Bonnetat, Christian et al, Cabinet PROPI
Conseils 23 rue de Léningrad, F-75008 Paris (FR)

## Description

La présente invention concerne un système de suspension pour un train arrière de roues de véhicule à essieu rigide, comportant une barre de torsion horizontale et transversale et deux lames élastiques longitudinales, qui sont disposées latéralement chacune d'un côté dudit châssis et dont chacune d'elles est liée rigidement à l'une de ses extrémités à ladite barre de torsion, est fixée dans sa partie intermédiaire audit essieu rigide et est liée à son autre extrémité audit châssis.

Un système de suspension de ce type est décrit dans le brevet britannique GB-A-694386. Toutefois, cette suspension connue comporte un grand nombre de pièces et est lourde et coûteuse.

La présente invention a pour objet de remédier à ces inconvénients.

A cette fin, selon l'invention, le système de suspension du type décrit ci-dessus est caractérisé en ce que ladite barre de torsion est articulée au châssis du véhicule de façon à pouvoir tourner autour de son axe longitudinal, en ce que l'extrémité avant de chacune desdites lames élastiques est en appui contre le châssis, et en ce que l'extrémité arrière de chacune desdites lames élastiques est montée coaxialement sur respectivement une des extrémités de ladite barre de torsion, les paliers d'articulation de la barre de torsion sur le châssis formant les paliers de débattement desdites lames élastiques.

On obtient ainsi une suspension simple, avec un petit nombre de pièces légères et peu coûteuses.

Dans le système selon l'invention, l'extrémité arrière des lames élastiques est avantageusement pourvue d'un œillet, qui est emmanché dans ladite barre de torsion. Ainsi, cette disposition coaxiale de l'œillet d'une lame élastique et de la barre de torsion agit comme élément stabilisateur ou anti-dévers, les paliers de fixation de ladite barre servant de moyens de fixation articulée de l'extrémité arrière des lames élastiques sur le châssis du véhicule.

Avantageusement, lesdites lames élastiques latérales sont identiques et disposées symétriquement par rapport à l'axe longitudinal dudit véhicule.

On remarquera que, dans le système de suspension selon l'invention, lorsque les lames latérales se déforment, ledit appui sur le châssis se déplace longitudinalement. Aussi, selon une caractéristique intéressante de la présente invention, l'appui de chaque lame élastique latérale sur le châssis comporte un amortisseur qui est articulé autour d'un axe transversal du châssis et dont la ligne d'action est alignée avec ladite lame élastique.

On notera également que, puisque les efforts de traction passent par les lames, entre le pont arrière et le châssis, le démarrage du véhicule tend à redresser les lames et donc à diminuer l'angle d'enroulement dudit pont. Par ailleurs, celui-ci peut être calé de manière à obtenir un angle d'enroulement optimal pour des sollicitations modérées.

L'articulation de la barre de torsion par rapport au châssis du véhicule peut être obtenue au moyen d'au moins un palier élastomérique. De plus, pour éviter au maximum les surcontraintes entre les lames et ladite barre de torsion, on choisit les moyens de liaison entre la barre de torsion et les lames élastiques latérales pour qu'ils assurent une rigidité importante, mais non pas absolue.

De préférence, ladite barre de torsion et lesdites lames élastiques sont réalisées en fibres à haute résistance enrobées de résine synthétique. Le fait de réaliser lesdites barre et lames en matière composite fibres-résine synthétique permet d'obtenir pour ces éléments des caractéristiques mécaniques correspondant aux fonctions qu'ils remplissent et qu'il serait impossible d'obtenir avec des éléments en acier, à dimensionnement et poids comparables. Grâce à la présente invention on peut donc réaliser une suspension qui, tout en étant simple, est légère, de sorte qu'elle permet d'obtenir un gain sur le poids total du véhicule, et donc sur sa consommation en carburant. Par exemple, la barre de torsion est réalisée sous la forme d'un tube à section extérieure polygonale, pour faciliter par emmanchement mécanique sa liaison avec les lames à chacune de ses extrémités.

On remarquera que la mise en place du système de suspension selon l'invention sur un véhicule est particulièrement aisée, de sorte que non seulement un tel système peut être monté sur des véhicules spécialement prévus à cet effet, mais encore on peut aisément modifier des véhicules existants pour y monter le système selon l'invention.

Les figures du dessin annexé feront bien comprendre comment l'invention peut être réalisée. Sur ces figures, des références identiques désignent des éléments semblables.

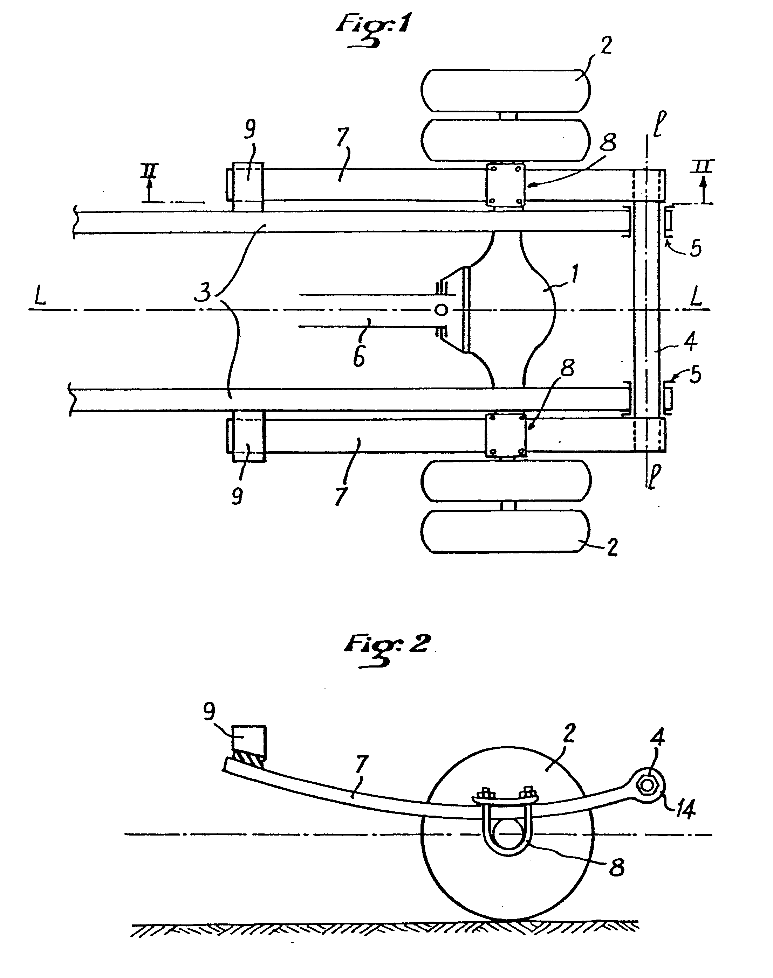

La fig. 1 est une vue schématique de dessus du système de suspension conforme à l'invention;

la fig. 2 est une coupe selon la ligne II–II de la fig. 1;

la fig. 3 illustre un mode de réalisation pratique du système de suspension selon l'invention monté sur un tracteur routier en vue de dessus, avec arrachements partiels;

la fig. 4 est une vue latérale correspondant à la fig. 3;

la fig. 5 est, dans sa partie gauche, une demi-vue arrière partielle du tracteur routier des fig. 3 et 4 et, dans sa partie droite, une demi-coupe selon la ligne V–V de la fig. 4;

la fig. 6 est une vue en coupe selon la ligne VI–VI de la fig. 5, illustrant l'articulation de la barre de torsion sur le châssis;

la fig. 7 est une vue en coupe selon la ligne VII–VII de la fig. 3, illustrant l'appui des lames élastiques sur le châssis;

la fig. 8 illustre, en coupe, un mode de liaison préféré entre la barre de torsion et les lames élastiques.

Le système de suspension selon l'invention, montré par ces figures, est appliqué au train de roues arrière d'un tracteur routier, constitué d'un pont arrière 1 portant des roues 2 à ses extrémités. Sur ces figures, le véhicule n'est représenté que par son axe longitudinal L–L et une portion de son châssis 3.

Ce système de suspension comporte un tube de torsion transversal 4, dont l'axe 1–1 est transversal au plan longitudinal médian du véhicule. Grâce à des paliers 5, le tube 4 est articulé sur le châssis 3 pour lui permettre de tourner autour de son axe longitudinal 1–1 qui est disposé horizontalement. Ce tube de torsion 4 est disposé en arrière du pont arrière 1, c'est-à-dire du côté de celui-ci opposé à l'arbre de transmission de puissance 6 qui s'étend longitudinalement par rapport au véhicule.

Le système de suspension selon l'invention comporte de plus deux lames élastiques longitudinales 7, disposées latéralement, de part et d'autre du châssis 3.

Ces lames 7 sont identiques et disposées symétriquement par rapport audit plan longitudinal médian de trace L–L.

Chaque lame élastique 7:
– est liée rigidement à son extrémité arrière à une extrémité latérale du tube de torsion 4;
– est fixée dans sa partie intermédiaire audit pont arrière 1, par l'intermédiaire d'un dispositif de fixation 8;
– et est en appui par son extrémité avant contre le châssis 3, par l'intermédiaire de dispositifs d'appui 9.

On voit ainsi que, dans le système de suspension qui vient d'être décrit:
– les fonctions de suspension verticale et de guidage latéral sont assurées par les lames élastiques 7, en association avec le pont arrière 1;
– la fonction antidevers (ou antiroulis) est assurée par la torsion du tube 4, par la flexion différentielle des lames 7 et éventuellement par la torsion desdites lames;
– la fonction de transmission des efforts longitudinaux est assurée par le tube 4 et les parties des lames 7 comprises entre celui-ci et le pont arrière 1;

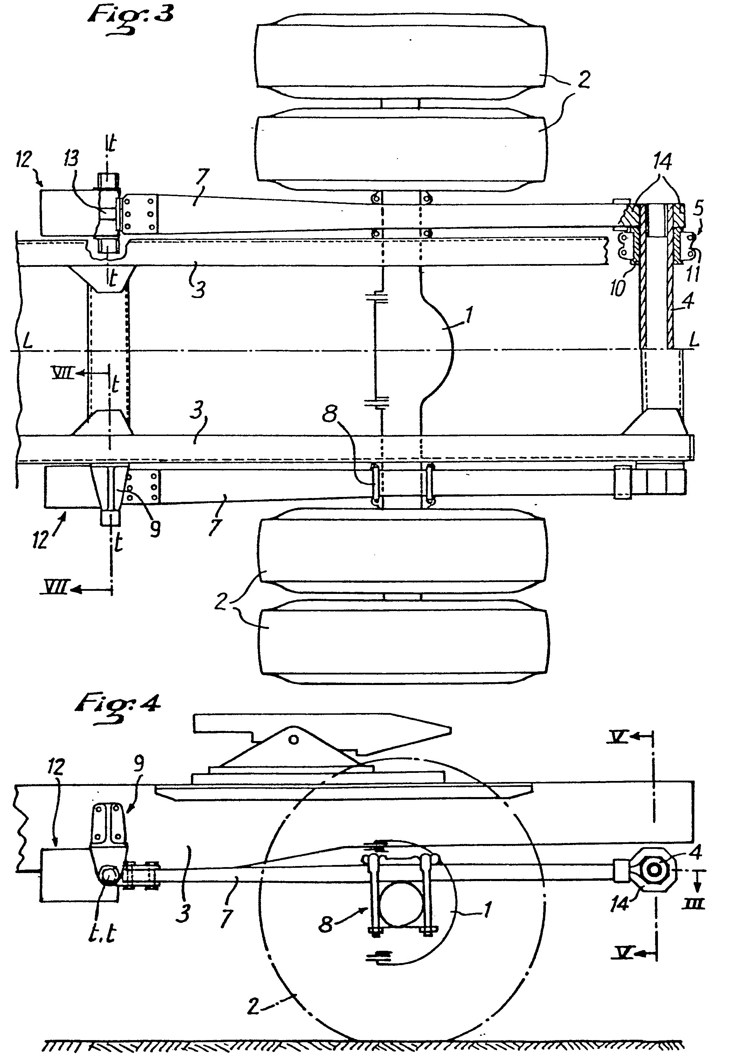

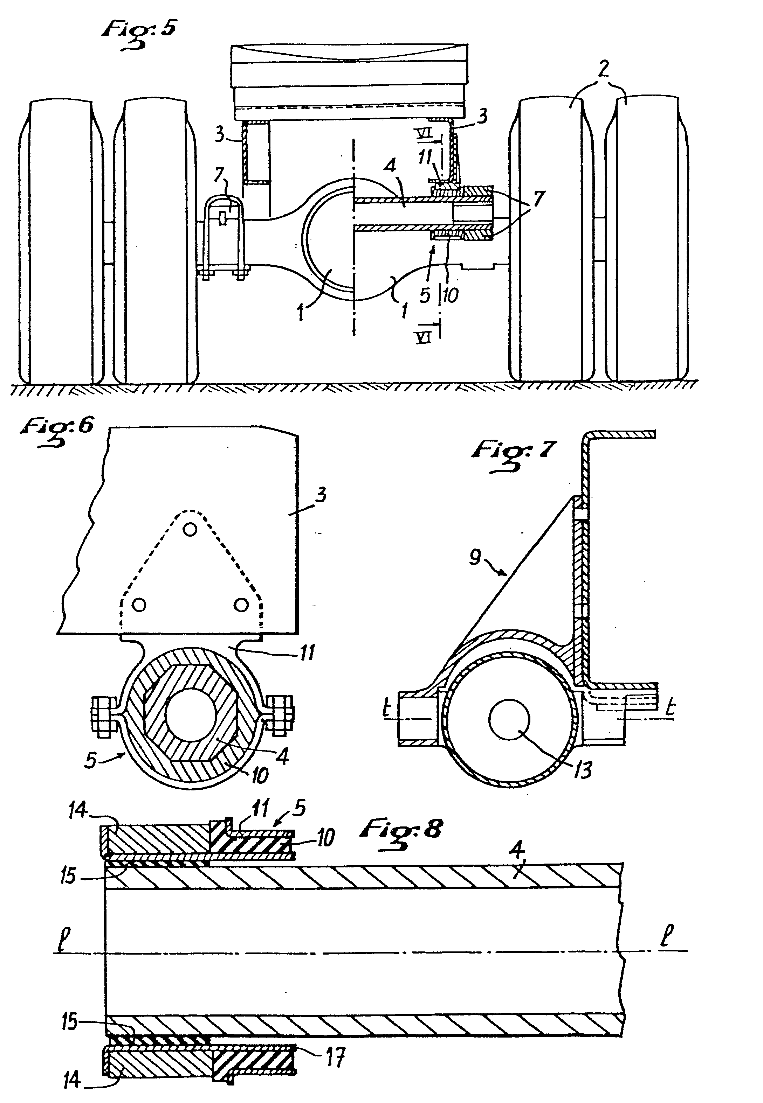

Dans l'exemple de réalisation des fig. 3 à 8, les paliers 5 ont été réalisés sous la forme de paliers élastomériques comportant un anneau 10 d'une matière élastomère bloqué entre la barre de torsion 4 et une monture 11 solidaire du châssis 3 (voir les fig. 3, 5 et 6).

Par suite, ces paliers élastomériques 5 assurent le filtrage des efforts longitudinaux.

Par ailleurs, dans l'exemple de réalisation des fig. 3 à 8, on a prévu des amortisseurs 12. Ceux-ci, qui peuvent être de tout type mais qui sont représentés ici sous la forme d'amortisseurs hydrauliques à déplacements axiaux, sont prévus pour servir d'appui 9 aux extrémités avant les lames 7.

Les amortisseurs 12 sont articulés sur le châssis 3 autour d'axes t–t transversaux auxdites lames et leur élément mobile 13 est rendu solidaire de celles-ci. Ainsi, ces amortisseurs 12 sont actionnés par le déplacement longitudinal des extrémités avant les lames 7, lorsque celles-ci exécutent leur mouvement de flexion (voir les fig. 3, 4 et 7).

De préférence, le tube de torsion 4 et les lames 7 sont constitués par des éléments réalisés en une matière composite constituée de fibres (de verre, de carbone, de bore etc. ou d'un mélange de ces matières) enrobées d'une résine synthétique, par la mise en œuvre de tout procédé connu (bobinage filamentaire, superposition de tresses, tissage, etc.) permettant d'obtenir pour lesdits tubes des valeurs élevées du rapport

$$\frac{E}{R},$$

dans lequel R est la contrainte à la rupture et E le module d'élasticité.

Comme le montrent les fig. 3, 4 et 5, à son extrémité arrière, chaque lame 7 forme une boucle 14 dans laquelle est encastrée l'extrémité correspondante du tube de torsion 4. Celui-ci peut présenter un contour extérieur de forme polygonale.

Avantageusement, dans l'exemple décrit, les lames sont réalisées en mèches de fibres de verre imprégnées de résine époxy, orientées longitudinalement dans l'axe de la lame, le tout étant polymérisé à chaud et sous pression dans on moule. Pour faciliter la fabrication et conserver la continuité des mèches, les lames sont de section constante.

Dans la variante de réalisation montrée par la fig. 8, on retrouve les paliers élastomériques 5, avec leur bague d'élastomère 10, destinés à articuler l'ensemble tube de torsion 4 – lames élastiques 7 par rapport au châssis 3. Cependant, au lieu d'encastrer directement les extrémités du tube 4 dans les boucles 14 des lames 7, on prévoit un tube métallique 17 et une bague intermédiaire 15 en élastomère. Cette bague intermédiaire 15 a pour rôle d'assouplir la liaison entre le tube 4 et les lames 7 de façon à réduire les surcontraintes à l'emplacement de l'encastrement du tube dans les boucles 14.

### Revendications

1. Système de suspension pour un train arrière de roues de véhicule à essieu rigide, comportant une barre de torsion (4) horizontale et transversale et deux lames élastiques longitudinales (7), qui sont disposées latéralement chacune d'un côté dudit châssis (3) et dont chacune d'elles est liée rigidement à l'une de ses extrémités à ladite barre de torsion (4), est fixée dans sa partie intermédiaire audit essieu rigide (1) et est liée à son autre extrémité audit châssis (3), caractérisé:
– en ce que ladite barre de torsion (4) est articulée au châssis (3) du véhicule de façon à pouvoir tourner autour de son axe longitudinal (1–1);
– en ce que l'extrémité avant de chacune desdites lames élastiques (7) est en appui contre le châssis (3); et

— en ce que l'extrémité arrière de chacune desdites lames élastiques (7) est montée coaxialement sur respectivement une des extrémités de ladite barre de torsion (4), les paliers (5) d'articulation de la barre de torsion (4) sur le châssis (3) formant les paliers de débattement desdites lames élastiques (7).

2. Système de suspension selon la revendication 1, caractérisé en ce que lesdites lames élastiques latérales (7) sont identiques et disposées symétriquement par rapport à l'axe longitudinal (L–L) dudit véhicule.

3. Système de suspension selon l'une quelconque des revendications 1 ou 2, caractérisé en ce que l'appui (9) de chaque lame élastique latérale sur le châssis comporte un amortisseur (12) qui est articulé autour d'un axe (t–t) transversal du châssis (3) et dont la ligne d'action est alignée avec ladite lame élastique (7).

4. Système de suspension selon l'une quelconque des revendications 1 à 3, caractérisé en ce que l'articulation de la barre de torsion par rapport au châssis du véhicule est obtenue au moyen d'au moins un palier élastomérique (5).

5. Système de suspension selon l'une quelconque des revendications 1 à 4, caractérisé en ce que les moyens de liaison entre la barre de torsion (4) et les lames élastiques latérales (7) assurent une rigidité importante, mais non pas absolue.

6. Système de suspension selon l'une des revendications 1 à 5, caractérisé en ce que ladite barre de torsion (3) et lesdites lames élastiques (7) sont réalisées en fibres à haute résistance enrobées de résine synthétique.

## Patentansprüche

1. Aufhängesystem für einen Satz von Hinterrädern eines Fahrzeugs mit Starrachse mit einem horizontal und transversal angeordneten Torsionsstab (4) und zwei elastischen Längsarmen (7), die jeweils seitlich auf einer Seite des Chassis (3) angeordnet sind und von denen jeder an einem seiner Enden fest mit dem Torsionsstab (4) verbunden ist, an seinem mittleren Teil an der Starrachse (1) befestigt ist und an seinem anderen Ende mit dem Chassis (3) verbunden ist, dadurch gekennzeichnet, dass
— der Torsionsstab (4) am Chassis (3) des Fahrzeugs derart angelenkt ist, dass er um seine Längsachse (1–1) drehen kann;
— das vordere Ende jedes der elastischen Arme (7) sich gegen das Chassis (3) abstützt; und dass
— das hintere Ende jedes der elastischen Arme (7) koaxial zu jeweils einem der Enden des Torsionsstabs (4) angebracht ist, wobei die Gelenklager (5) des Torsionsstabs (4) am Chassis (3) die Durchfederungslager der elastischen Arme (7) bilden.

2. Aufhängesystem nach Anspruch 1, dadurch gekennzeichnet, dass die elastischen Arme (7) miteinander identisch und symmetrisch zur Längsachse (L–L) des Fahrzeugs angeordnet sind.

3. Aufhängesystem nach einem der Ansprüche 1 oder 2, dadurch gekennzeichnet, dass die Abstützung (9) jedes seitlichen elastischen Arms am Chassis einen Stossdämpfer (12) umfassst, der drehbar um eine Querachse (t–t) des Chassis (3) angelenkt ist und dessen Wirklinie mit dem elastischen Arm (7) ausgerichtet ist.

4. Aufhängesystem nach einem der Ansprüche 1 bis 3, dadurch gekennzeichnet, dass die Anlenkung des Torsionsstabs bezüglich des Fahrzeugchassis durch wenigstens ein Elastomerlager (5) erzielt wird.

5. Aufhängesystem nach einem der Ansprüche 1 bis 4, dadurch gekennzeichnet, dass die Verbindungsmittel zwischen dem Torsionsstab (4) und den seitlichen elastischen Armen (7) eine beträchtliche, aber durchaus nicht absolute Starrheit sichern.

6. Aufhängesystem nach einem der Ansprüche 1 bis 5, dadurch gekennzeichnet, dass der Torsionsstab (3) und die elastischen Arme (7) aus mit Kunstharz umhüllten Fibern von hoher Festigkeit hergestellt sind.

## Claims

1. Suspension system for a rear set of vehicle wheels with rigid axle, comprising a horizontal and transverse torsion bar (4) and two longitudinal elastic blades (7) which are disposed laterally each on one side of said chassis (3) and of which each is rigidly connected at one of its ends to said torsion bar (4), is fixed in its intermediate part to said rigid axle (1) and is connected it its other end to said chassis (3), characterized in that:
— said torsion bar (4) is articulated on the chassis (3) of the vehicle so as to be able to rotate about its longitudinal axis (1–1);
— the front end of each of said elastic blades (7) is in abutment against the chassis (3); and
— the rear end of each of said elastic blades (7) is coaxially mounted on one of the ends of said torsion bar (4) respectively, the articulation bearings (5) of the torsion bar (4) on the chassis (3) forming the clearance bearings of said elastic blades (7).

2. Suspension system according to claim 1, characterized in that said lateral elastic blades (7) are identical and disposed symmetrically with respect to the longitudinal axis (L–L) of said vehicle.

3. Suspension system according to any one of claims 1 or 2, characterized in that the bearing (9) of each lateral elastic blade on the chassis comprises a shock absorber (12) which is articulated about a transverse axis (t–t) of the chassis (3) and of which the line of action is aligned with said elastic blade (7).

4. Suspension system according to any one of claims 1 to 3, characterized in that the articulation of the torsion bar with respect to the chassis of the vehicle is obtained by means of at least one elastomeric bearing (5).

5. Suspension system according to any one of claims 1 to 4, characterized in that the means of connection between the torsion bar (4) and the lateral elastic blades (7) ensure considerable, but not absolute, rigidity.

6. Suspension system according to any one of claims 1 to 5, characterized in that said torsion bar (3) and said elastic blades (7) are made of high-resistance fibers coated with synthetic resin.

Fig.1

Fig.2

Fig. 3

0 161 146

Fig. 4

Fig. 5

Fig. 6

Fig. 7

Fig. 8